# EUROPEAN PATENT APPLICATION

(11) **EP 2 770 556 A1**
(43) Date of publication of application: **27.08.2014**
(21) Application number: 12841350.7
(22) Date of filing: 18.10.2012
(51) Int. Cl.: H01M 2/20, H01M 2/10, H01M 2/30

(54) **POWER SUPPLY DEVICE**

(30) Priority: 19.10.2011 JP 2011229804
(71) Applicant: Yazaki Corporation, Tokyo 108-0073 (JP)
(72) Inventor: YOSHIOKA, Nobuaki, Kakegawa-shi Shizuoka 437-1421 (JP); KAI, Kazuaki, Kakegawa-shi Shizuoka 437-1421 (JP)
(74) Representative: HOFFMANN EITLE
(86) International application number: PCT/JP2012/076960
(87) International publication number: WO 2013/058323

(57) **Abstract**

A power supply device (A) includes a terminal (17a, 17b) including an electrode connection part having first and second surfaces directed to opposite sides each other, a first battery cell (2) arranged on one side based on a position of the electrode connection part (17a, 17b), and a second battery cell (2) arranged on the other side based on the position of the electrode connection part (17a, 17b) and stacked on the first battery cell (2). The first battery cell (2) has a first electrode (2b) arranged to be superposed on the first surface of the electrode connection part (17a, 17b). The second battery cell (2) has a second electrode arranged to be superposed on the second surface of the electrode connection part (17a, 17b) .

## Description

### Technical Field

The present invention relates to a power supply device having a plurality of stacked battery cells.

### Background Art

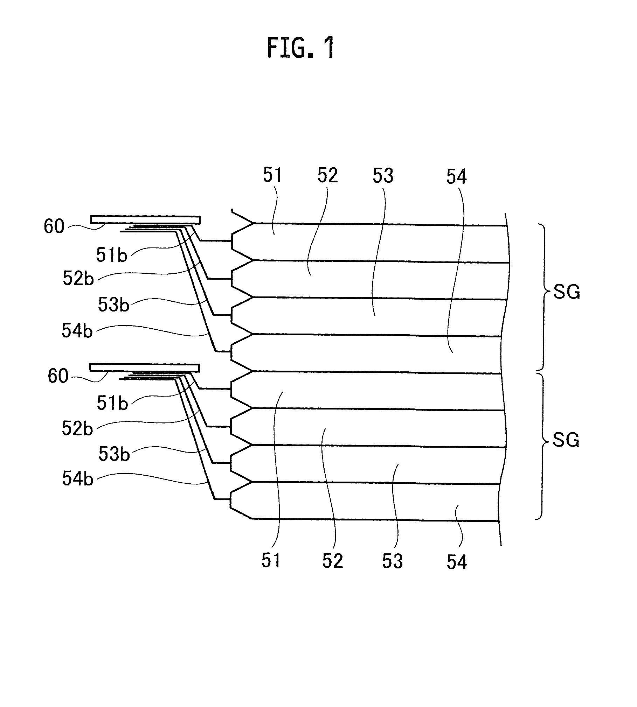

Hybrid automobiles and electric automobiles have a power supply device as, for example, a driving source of an electric motor. A power supply device described in Patent Literature 1 has a plurality of stacked battery cells, and the plurality of battery cells is connected together in a desired arrangement to obtain desired power. The plurality of battery cells is connected together in parallel as illustrated in FIG. 1.

In FIG. 1, a plurality of battery cells 51 to 54 is stacked. The respective battery cells 51 to 54 have plate-shaped electrodes 51b to 54b, respectively. The electrodes 51b to 54b of the plurality of battery cells connected together in parallel (hereinafter referred to as a "battery cell group SG") are each arranged so as to be superposed on the side of one surface of the same terminal 60. The electrodes 51b to 54b of the respective battery cells 51 to 54 of the same battery cell group SG are formed to be different in length.

The plurality of electrodes 51b to 54b arranged so as to be superposed on the one surface of the terminal 60 is connected to the terminal 60 by welding or the like.

### Citation List

### Patent Literature

Patent Literature 1: Japanese Unexamined Patent Application Publication No. 2004-55492

### Summary of Invention

In the related example described above, however, the electrodes 51b to 54b equal in number to the battery cells 51 to 54 of the battery cell group SG are arranged so as to be superposed on the one surface of the terminal 60. Accordingly, with an increase in the number of the electrodes 51b to 54b connected to the terminal 60, larger energy is required depending on their connection method.

The respective battery cells 51 to 54 of the battery cell group SG are required to be formed such that the lengths of the electrodes 51b to 54b are all different. Therefore, the types (parts numbers) of the battery cells 51 to 54 are increased.

An object of the present invention is to provide a power supply device capable of minimizing energy for connecting a plurality of electrodes to a terminal as much as possible and reducing the types of battery cells used.

A power supply device in accordance with some embodiments of the present invention includes: a terminal including an electrode connection part having first and second surfaces directed to opposite sides each other; a first battery cell arranged on one side based on a position of the electrode connection part, the first battery cell having a first electrode arranged to be superposed on the first surface of the electrode connection part; and a second battery cell arranged on the other side based on the position of the electrode connection part and stacked on the first battery cell, the second battery cell having a second electrode arranged to be superposed on the second surface of the electrode connection part.

The power supply device may include first and second battery cell groups each constituted of the first and second battery cells. The terminal may include a joining part and first and second electrode connection parts joined together by the joining part. The electrodes of the respective battery cells of the first battery cell group may be connected to the first electrode connection part. The electrodes of the respective battery cells of the second battery cell group may be connected to the second electrode connection part.

The first and second electrode connection parts may have surfaces facing each other, and the joining part may have electrode insertion holes opened toward the surfaces of the first and second electrode connection parts facing each other.

The power supply device may further include: a third battery cell arranged on the one side based on the position of the electrode connection part and stacked on the first battery cell, the third battery cell having a third electrode arranged to be superposed on the first electrode of the first battery cell on a side of the first surface of the electrode connection part; and a fourth battery cell arranged on the other side based on the position of the electrode connection part and stacked on the second battery cell, the fourth battery cell having a fourth electrode arranged to be superposed on the second electrode of the second battery cell on a side of the second surface of the electrode connection part.

The power supply device may include first and second battery cell groups each constituted of the first to fourth battery cells. The terminal may include a joining part and first and second electrode connection parts joined together by the joining part. The electrodes of the respective battery cells of the first battery cell group may be connected to the first electrode connection part. The electrodes of the respective battery cells of the second battery cell group may be connected to the second electrode connection part.

The first and second electrode connection parts may have surfaces facing each other, and the joining part may have electrode insertion holes opened toward the surfaces of the first and second electrode connection parts facing each other.

With the configurations described above, the electrodes of a battery cell group are divided and arranged on both surfaces of an electrode connection part. Therefore, the number of the superposed electrodes is reduced, and energy for connecting together the electrode connection part and the electrodes of the battery cell group can be reduced. Of the battery cell group, battery cells arranged at a symmetrical position based on the position of the electrode connection part can have the electrodes with the same protrusion heights. Therefore, the types of the battery cells can be reduced.

### Brief Description of Drawings

FIG. 1 is a side view illustrating a structure in which associated terminals and electrodes are connected together.
FIG. 2 is a perspective view of a power supply device according to an embodiment of the present invention.
FIG. 3 is a perspective view of the power supply device with an insulation cover thereof opened according to the embodiment of the present invention.
FIG. 4 is a perspective view of stacked battery cells according to the embodiment of the present invention.
FIGS. 5(a) and 5(b) illustrate the embodiment of the present invention, FIG. 5 (a) being a perspective view of a first battery cell, and FIG. 5 (b) being a perspective view of a second battery cell.
FIG. 6 is an exploded perspective view of one insulation block body according to the embodiment of the present invention.
FIG. 7 is an exploded perspective view of the other insulation block body according to the embodiment of the present invention.
FIG. 8 is a perspective view in which parts of an electric circuit system such as terminals are extracted according to the embodiment of the present invention.
FIG. 9 is a perspective view of an intermediate terminal according to the embodiment of the present invention.
FIGS. 10(a) and 10(b) illustrate the embodiment of the present invention, FIG. 10(a) being a cross-sectional view illustrating positions at which an output terminal and the intermediate terminal and electrodes are connected together, and FIG. 10 (b) being a perspective view illustrating positions at which the intermediate terminal and the electrodes are connected together.

### Description of Embodiments

Hereinafter, a description will be given of an embodiment of the present invention based on the drawings.

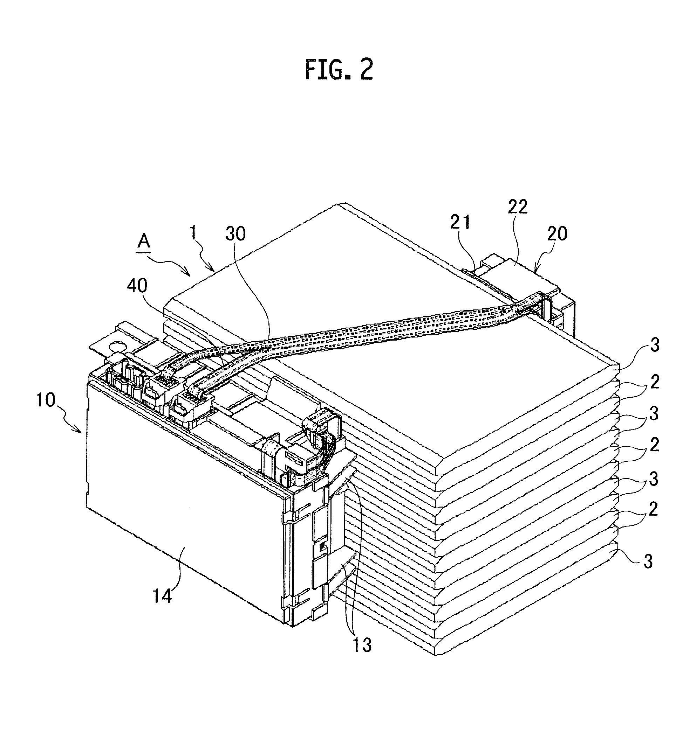

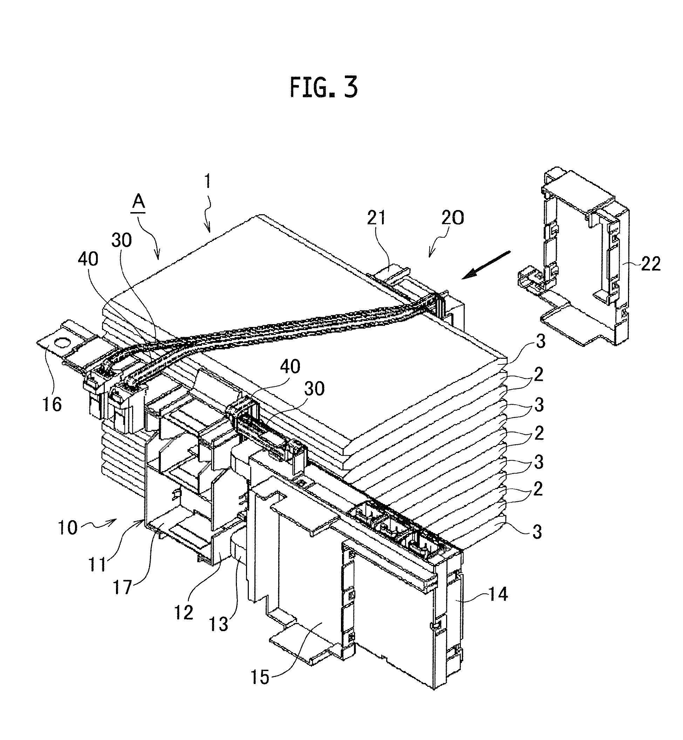

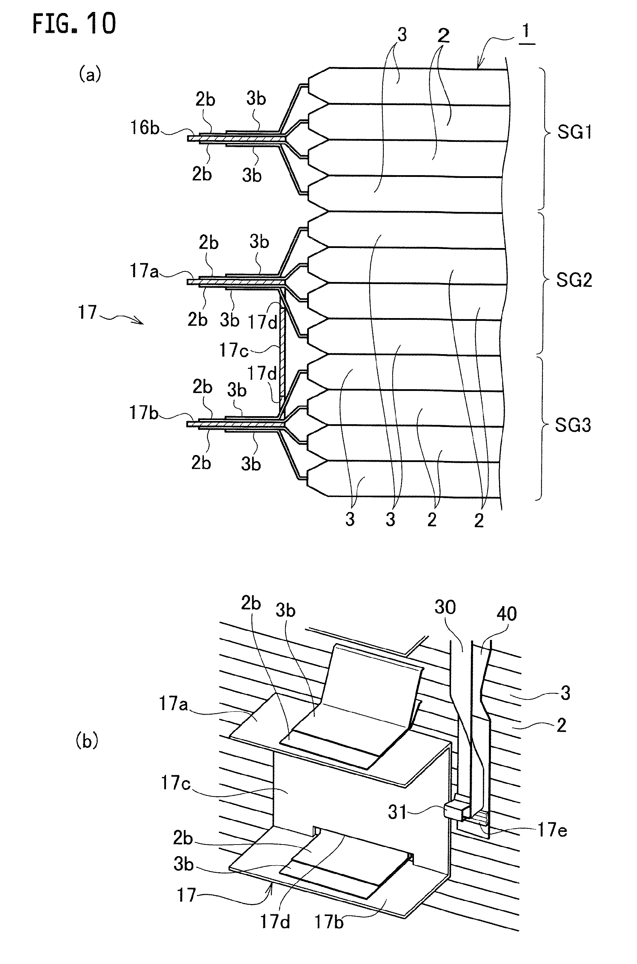

FIGS. 2 to 10(a) and 10(b) illustrate the embodiment of the present invention. As illustrated in FIGS. 2 and 3, a power supply device A has a battery aggregate 1 constituted of a plurality of (12) stacked battery cells 2 and 3, a pair of insulation block bodies 10 and 20 arranged on both sides of the battery aggregate 1, two flat cables 30 for a thermistor, and two flat cables 40 for voltage detection.

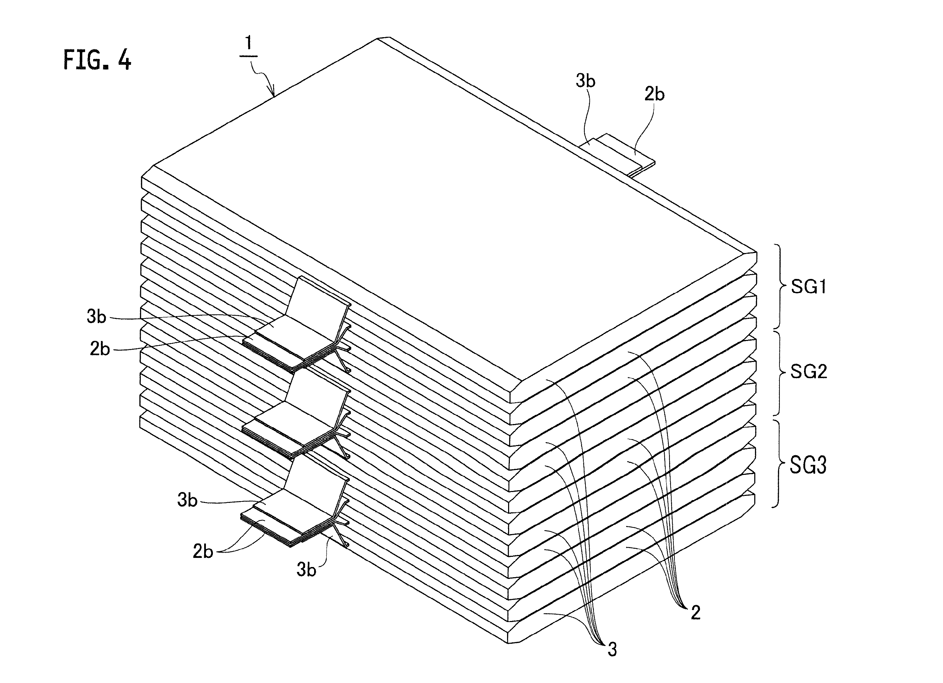

The battery aggregate 1 is constituted of the 12 battery cells 2 and 3. As illustrated in detail in FIG. 4, the battery aggregate 1 is divided into three battery cell groups SG1, SG2, and SG3, each of which has four of the battery cells 2 and 3 connected together in parallel, and the three battery cell groups SG1, SG2, and SG3 are connected together in series.

The battery cells 2 and 3, respectively, have flat rectangular cell main bodies 2a and 3a and a pair of electrodes (positive and negative electrodes) 2b and 3b protruded from the right and left side surfaces of the cell main bodies 2a and 3a. The respective electrodes 2b and 3b are, even where the battery cells 2 and 3 are arranged with the front and rear sides thereof reversed, set to be placed in the same positions in plan view only with the upper and lower directions thereof made different. The respective electrodes 2b and 3b are formed into thin film shapes (plate shapes). The respective electrodes 2b and 3b are protruded to the sides of the rear surfaces.

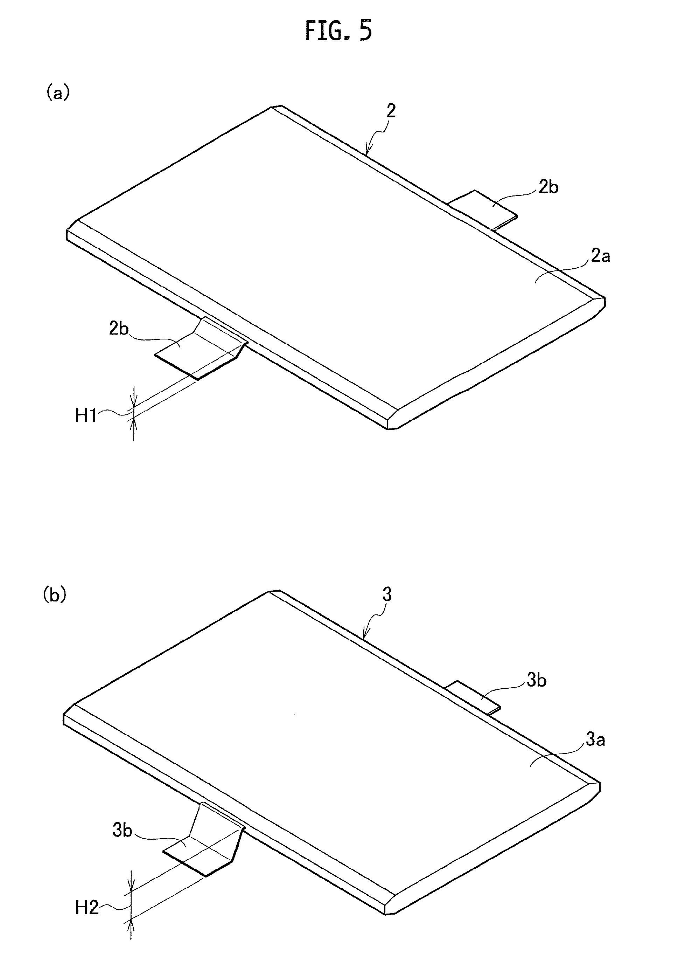

As the battery cells 2 and 3, two types of battery cells having the electrodes 2b and 3b different in height, i.e., first battery cells 2 and second battery cells 3 are used. As illustrated in FIG. 5(a), the first battery cell 2 has the electrodes 2b whose protrusion height H1 is low. As illustrated in FIG. 5(b), the second battery cell 3 has the electrodes 3b whose protrusion height H2 is high. The 12 stacked battery cells 2 and 3 successively constitute the first battery cell group SG1, the second battery cell group SG2, and the third battery cell group SG3 from above. The stacking pattern of the battery cells 2 and 3 of the respective battery cell groups SG1, SG2, and SG3 will be described in detail below.

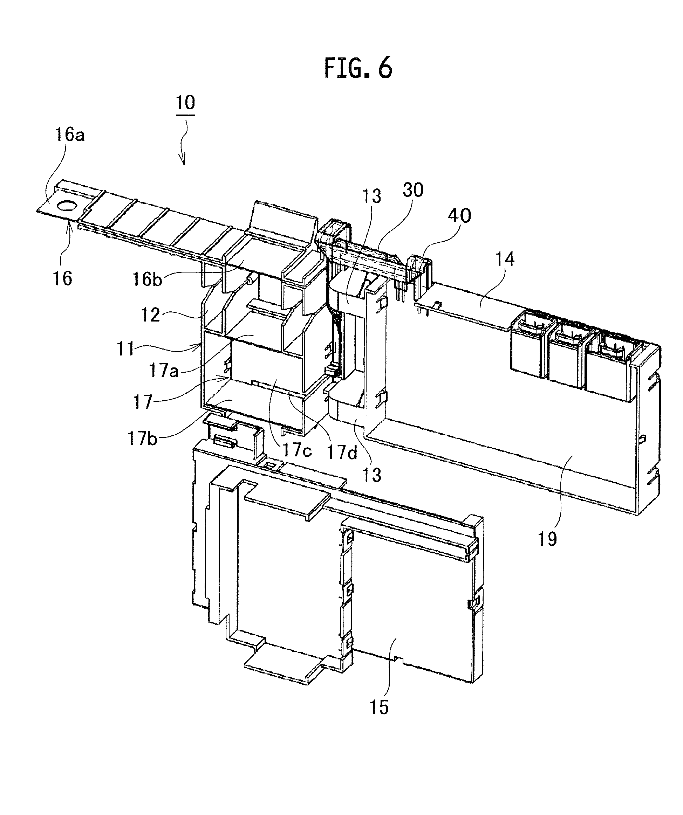

As illustrated in detail in FIG. 6, the one insulation block body 10 has an insulation case main body 11 and an insulation cover 15. The insulation case main body 11 has a terminal accommodation part 12 and a board accommodation part 14 joined to the terminal accommodation part 12 via a hinge part 13. Inside the terminal accommodation part 12, an output terminal 16 and an intermediate terminal 17 are fixed. The output terminal 16 and the intermediate terminal 17 will be described in detail below. A control board 19 is accommodated in the board accommodation part 14. The insulation cover 15 is attached so as to cover the control board 19 of the board accommodation part 14. The transition between a closed state illustrated in FIG.2 and an open state illustrated in FIG. 3 can be made when the board accommodation part 14 is rotated via the hinge part 13. In the closed state illustrated in FIG. 2, the side of the opening of the terminal accommodation part 12 is sealed by the board accommodation part 18 and the insulation cover 15. Thus, the one insulation block body 10 insulates the electrodes 2b and 3b protruded to one side of the battery aggregate 1. In addition, the one insulation block body 10 holds the respective flat cables 30 and 40 for the thermistor and voltage detection arranged on the side of the one insulation block body 10.

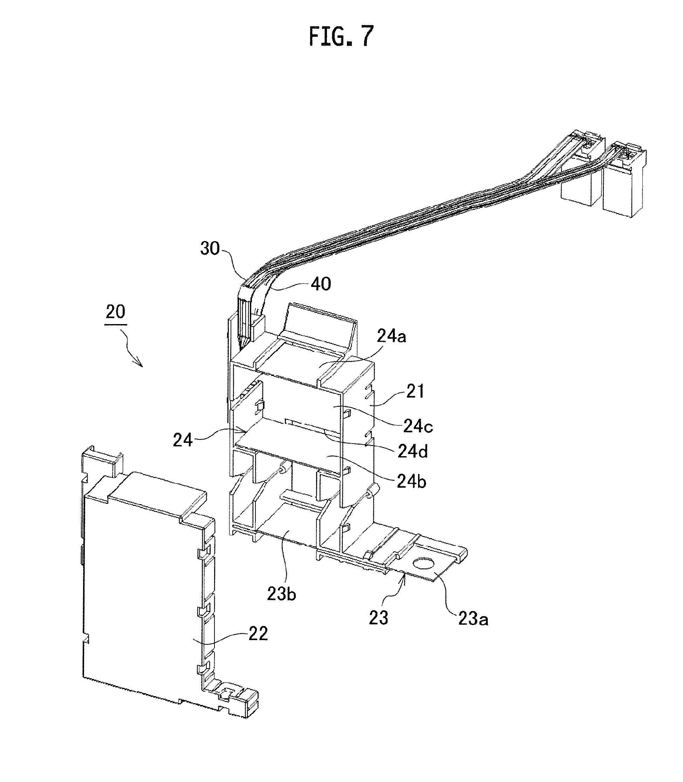

As illustrated in detail in FIG. 7, the other insulation block body 20 has an insulation case main body 21 and an insulation cover 22. Inside the insulation case main body 21, an output terminal 23 and an intermediate terminal 24 are fixed. The output terminal 23 and the intermediate terminal 24 will be described in detail below. The insulation cover 22 is attached so as to cover the side of the opening of the insulation case main body 21. The other insulation block body 20 insulates the electrodes 2b and 3b protruded to the other side of the battery aggregate 1. In addition, the other insulation block body 20 holds the respective flat cables 30 and 40 for the thermistor and voltage detection arranged on the side of the other insulation block body 20.

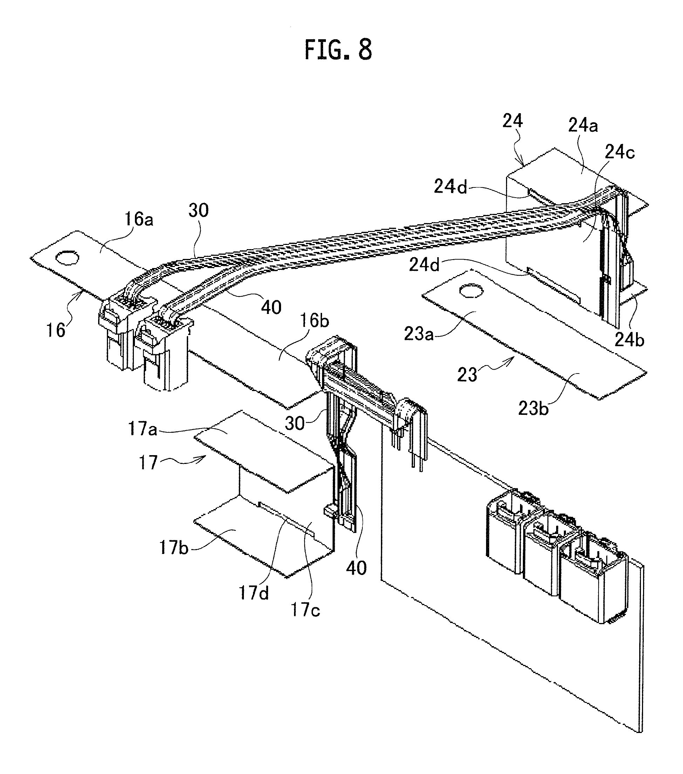

One of the output terminals 16 and 23 of the pair of insulation block bodies 10 and 20 is a positive side output terminal, and the other of the output terminals 23 and 16 thereof is a negative side output terminal. As illustrated in detail in FIG. 8, the respective output terminals 16 and 23 are formed of conductive metal bus bars. The respective output terminals 16 and 23 are formed into straight shapes. The respective output terminals 16 and 23 are partially exposed from the respective insulation case main bodies 11 and 21, and the exposed parts serve as outside connection parts 16a and 23a. The exposed parts of the respective output terminals 16 and 23 inside the respective insulation cases 11 and 21 serve as electrode connection parts 16b and 23b. On both surfaces of the electrode connection parts 16b and 23b, the electrodes 2b and 3b inserted via the openings of the insulation case main bodies 11 and 21 can be arranged, respectively.

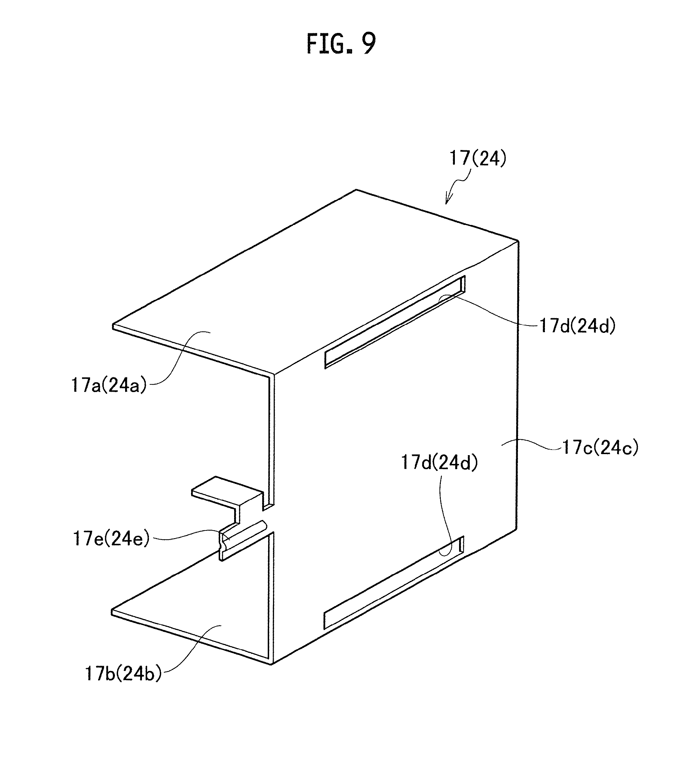

As illustrated in detail in FIGS. 8 and 9, the respective intermediate terminals 17 and 24 are formed of conductive metal bus bars. The respective intermediate terminals 17 and 24 are formed into substantially U shapes by two electrode connection parts 17a, 17b, 24a, and 24b arranged in parallel with an interval therebetween and joining parts 17c and 24c that, respectively, join the two electrode connection parts 17a, 17b, 24a, and 24b together. At positions near the inner surfaces of the respective electrode connection parts 17a, 17b, 24a, and 24b of the joining parts 17c and 24c, electrode insertion holes 17d and 24d are opened, respectively. With the use of the respective electrode insertion holes 17d and 24d, the electrodes 2b and 3b can be inserted on the sides of the inner surfaces of the respective electrode connection parts 17a, 17b, 24a, and 24b. On the sides of the outer surfaces of the respective electrode connection parts 17a, 17b, 24a, and 24b, the electrodes 2b and 3b can be inserted using space above and below the joining parts 17c and 24c. From the reason described above, the electrodes 2b and 3b inserted via the openings of the insulation case main bodies 11 and 21 can be arranged on both surfaces of the respective electrode connection parts 17a, 17b, 24a, and 24b. The joining parts 17c and 24c are integrally provided with connection parts 17e and 24e for inspection, respectively. One end side of the flat cable 30 for the thermistor is fixed by a clip 31 to the connection parts 17e and 24e for inspection. The one end side of the flat cable 30 for the thermistor has the thermistor (not illustrated) mounted thereon. The other end of the flat cable 30 for the thermistor is connected to the control board 19. Thus, information on the temperatures of the intermediate terminals 17 and 24 is output to the control board 19. One end of the flat cable 40 for voltage detection is fixed to the connection parts 17e and 24e for inspection. The other end of the flat cable 40 for voltage detection is connected to the control board 19. Thus, information on voltage at the positions of the intermediate terminals 17 and 24 is output to the control board 19. Based on these information items, the control board 19 can determine whether any failure occurs in the temperatures and the output voltages of the battery cells.

Next, a description will be given of the connections between the respective electrodes 2b and 3b of the battery cells 2 and 3 and the output terminals 16 and 23 and the intermediate terminals 17 and 24. First, the 12 stacked battery cells 2 and 3 successively constitute the first battery cell group SG1, the second battery cell group SG2, and the third battery cell group SG3 from above. The four battery cells 2 and 3 of the respective battery cell groups are stacked in such an arrangement that two of the battery cells on the inside are the first battery cells 2 and two of the battery cells on the outside are the second battery cells 3 and that the electrodes 2b and 3b facing each other have the same polarities and the protruding directions of the electrodes 2b and 3b face each other.

Thus, as illustrated in FIG. 10(a), on one side of the first battery cell group SG1, the electrodes 2b and 3b of the battery cells 2 and 3 arranged on an upper side (one side) are arranged so as to be superposed on the upper surface (one surface) of the electrode connection part 16b and those of the battery cells 2 and 3 arranged on a lower side (the other side) are arranged so as to be superposed on the lower surface (the other surface) of the electrode connection part 16b, the electrodes 2b and 3b of the battery cells 2 and 3 arranged on the upper and lower sides being arranged based on the position of the electrode connection part 16b of the output terminal 16.

As illustrated in FIGS. 10(a) and 10(b), on one side of the second battery cell group SG2 and the third battery cell group SG3, the electrodes 2b and 3b of the battery cells 2 and 3 arranged on upper sides (one sides) are arranged so as to be superposed on the upper surfaces (one surfaces) of the electrode connection parts 17a and 17b and those of the battery cells 2 and 3 arranged on lower sides (the other sides) are arranged so as to be superposed on the lower surfaces (the other surfaces) of the electrode connection parts 17a and 17b, the electrodes 2b and 3b of the battery cells 2 and 3 arranged on the upper and lower sides being arranged based on the positions of the respective electrode connection parts 17a and 17b of the intermediate terminal 17.

Although not illustrated in the figures, on the other side of the first battery cell group SG1 and the second battery cell group SG2, the respective electrodes 2b and 3b are, respectively, arranged on the respective electrode connection parts 24a and 24b of the intermediate terminal 24 in the same state as the above. In addition, on the other side of the third battery cell SG3, the respective electrodes 2b and 3b are arranged on the electrode connection part 23b of the output terminal 23 in the same state as the above.

The plurality of electrodes 2 and 3 arranged so as to be superposed on the respective surfaces of the output terminals 16 and 23 and the intermediate terminals 17 and 24 are connected to the output terminals 16 and 23 and the intermediate terminals 17 and 24 by welding or the like.

As described above, since the electrodes 2b and 3b of the respective battery cell groups SG1 to SG3 are divided and arranged on both surfaces of the electrode connection parts 16b, 17a, 17b, 23b, 24a, and 24b, the number of the superposed electrodes 2b and 3b is reduced. Therefore, energy for connecting together the electrode connection parts 16b, 17a, 17b, 23b, 24a, and 24b and the electrodes 2b and 3b of the respective battery cell groups SG1 to SG3 can be reduced. Of the respective battery cell groups SG1 to SG3, pairs of the battery cells 2 (or 3) arranged at symmetrical positions based on the positions of the electrode connection parts 16b, 17a, 17b, 23b, 24a, and 24b can have the electrodes 2b and 3b whose protrusion heights are the same (i.e., the same parts numbers) . Therefore, the types (parts numbers) of the battery cells 2 and 3 can be reduced. Here, the first battery cells 2 and the second battery cells 3 are different only in the protrusion heights of the electrodes 2b and 3b. Therefore, the battery cells 2 and 3 manufactured through the same processes other than the folding process of the electrodes 2b and 3b can be used.

Although the number of the battery cells 2 and 3 of the battery cell groups SG1 to SG3 is four in the present embodiment, it may be six or more. Even where the number of the battery cells 2 and 3 of the battery cell groups SG1 to SG3 is increased, the types of the battery cells 2 and 3 used can be minimized from the reason described above. In addition, the number of the battery cells 2 and 3 of the battery cell groups SG1 to SG3 may be two.

The intermediate terminals 17 and 24 have the two electrode connection parts 17a, 17b, 24a, and 24b joined together via the joining parts 17c and 24c, respectively. Accordingly, the respective battery cells 2 and 3 of the two battery cell groups (the combination of SG2 and SG3 and the combination of SG1 and SG2) can be connected together in parallel, and the two battery cell groups (the combination of SG2 and SG3 and the combination of SG1 an SG2) can be connected together in series. Note that the intermediate terminals 17 and 24 may have three or more electrode connection parts 17a, 17b, 24a, and 24b joined together via the joining parts 17c and 24c, respectively.

The joining parts 17c and 24c, respectively, have the electrode insertion holes 17d and 24d opened on the sides of the inner surfaces of the respective electrode connection parts 17a, 17b, 24a, and 24b. Accordingly, since the electrodes 2b and 3b can be inserted from the sides of the outer surfaces of the joining parts 17c and 24c, connection operability for connecting together the intermediate terminals 17 and 24 and the electrode parts 2b and 3b is excellent.

The flat cables 30 and 40 are flat strip-shaped cables and include, for example, flexible flat cables (FFCs) and flexible printed circuits (FPCs).

The present invention has been described based on an embodiment, but the present invention is not limited to such an embodiment and the component of each unit can be replaced by a unit of any configuration having a similar function.

The entire content of Japanese Patent Application No. 2011-229804 (filing date: October 19, 2011) is incorporated herein by reference.

## Claims

1. A power supply device comprising:
a terminal including an electrode connection part having first and second surfaces directed to opposite sides each other;
a first battery cell arranged on one side based on a position of the electrode connection part, the first battery cell having a first electrode arranged to be superposed on the first surface of the electrode connection part; and
a second battery cell arranged on the other side based on the position of the electrode connection part and stacked on the first battery cell, the second battery cell having a second electrode arranged to be superposed on the second surface of the electrode connection part.

2. The power supply device according to claim 1, comprising first and second battery cell groups each constituted of the first and second battery cells, wherein
the terminal includes
a joining part and
first and second electrode connection parts joined together by the joining part,
the electrodes of the respective battery cells of the first battery cell group are connected to the first electrode connection part, and
the electrodes of the respective battery cells of the second battery cell group are connected to the second electrode connection part.

3. The power supply device according to claim 2, wherein
the first and second electrode connection parts have surfaces facing each other, and
the joining part has electrode insertion holes opened toward the surfaces of the first and second electrode connection parts facing each other.

4. The power supply device according to claim 1, further comprising:
a third battery cell arranged on the one side based on the position of the electrode connection part and stacked on the first battery cell, the third battery cell having a third electrode arranged to be superposed on the first electrode of the first battery cell on a side of the first surface of the electrode connection part; and
a fourth battery cell arranged on the other side based on the position of the electrode connection part and stacked on the second battery cell, the fourth battery cell having a fourth electrode arranged to be superposed on the second electrode of the second battery cell on a side of the second surface of the electrode connection part.

5. The power supply device according to claim 4, comprising first and second battery cell groups each constituted of the first to fourth battery cells, wherein
the terminal includes
a joining part and
first and second electrode connection parts joined together by the joining part,
the electrodes of the respective battery cells of the first battery cell group are connected to the first electrode connection part, and
the electrodes of the respective battery cells of the second battery cell group are connected to the second electrode connection part.

6. The power supply device according to claim 5, wherein
the first and second electrode connection parts have surfaces facing each other, and
the joining part has electrode insertion holes opened toward the surfaces of the first and second electrode connection parts facing each other.
